# EUROPEAN PATENT SPECIFICATION

(11) **EP 2 810 402 B1**
(45) Date of publication and mention of the grant of the patent: **25.07.2018**
(21) Application number: 13703125.8
(22) Date of filing: 01.02.2013
(51) Int. Cl.: G06F 21/60, H04L 9/30, H04L 9/14, G06F 21/32, H04L 9/32, H04L 29/06, H04L 9/08

(54) **A METHOD AND DATABASE SYSTEM FOR SECURE STORAGE AND COMMUNICATION OF INFORMATION**
VERFAHREN UND DATENBANKSYSTEM ZUR SICHEREN SPEICHERUNG UND ÜBERMITTLUNG VON INFORMATIONEN
PROCÉDÉ ET SYSTÈME DE BASE DE DONNÉES PERMETTANT L'ENREGISTREMENT ET LA COMMUNICATION SÉCURISÉS D'INFORMATIONS

(30) Priority: 03.02.2012 GB 201201930; 03.02.2012 GB 201201931; 29.05.2012 GB 201209534
(43) Date of publication of application: 10.12.2014
(73) Proprietor: Qredo Limited, Richmond TW9 1UW (GB)
(72) Inventor: SALLIS, David, London, Greater London TW9 1UW (GB)
(74) Representative: Thompson, Andrew John
(86) International application number: PCT/GB2013/050229
(87) International publication number: WO 2013/114125

(56) References cited:
- US-B1- 6 687 375
- US-B1- 7 783 043
- Meltem Sönmez Turan ET AL: "NIST Special Publication 800-132 Recommendation for Password-Based Key Derivation Part 1: Storage Applications National Institute of Standards and Technology", , 1 December 2010 (2010-12-01), XP055267552, Retrieved from the Internet: URL:http://citeseerx.ist.psu.edu/viewdoc/d ownload?doi=10.1.1.697.7177&rep=rep1&type= pdf [retrieved on 2016-04-21]
- Christian Rathgeb ET AL: "A survey on biometric cryptosystems and cancelable biometrics", EURASIP Journal on Information Security, vol. 2011, no. 1, 1 January 2011 (2011-01-01), page 3, XP055033595, ISSN: 1687-417X, DOI: 10.1186/1687-417X-2011-3

## Description

### Field of the Invention

The present invention relates to a method and database system for secure storage and communication of information.

### Background to the Invention

Centralised databases containing personal information are held by governments, financial institutions, commercial companies and social-networking services in ever-increasing numbers and scale. Bulk thefts and loss of information are now a regular occurrence and have serious consequences for national security, industry and commerce, policing and a healthy society.

Individuals are increasing the number of transactions they undertake, both financially and socially, with other individuals and entities over the Internet. The variable, and generally very poor, level of identity and data authentication in these remote transactions, combined with the extreme difficulty of securing central databases, has created a modern crime wave of fraud and identity theft that is increasingly industrialised and globalised.

US 6,687,375 B1 is directed towards methods and systems which generate a cryptographic key utilising user specific information to generate a user dependent key. The user specific information may be a user identification or a biometric information associated with a user.

US 7,783,043 B1 is directed towards methods and systems for generating key chains, each key chain containing a plurality of keys, each key in each key chain being related to other keys in the respective key chain by at least one inverse of a one-way function.

### Summary of the Invention

In a first aspect, the present invention provides, a computer implemented method of generating and using a keychain in a database system for secure storage and communication of information, the database system comprising: a database for storing user repositories containing encrypted user data items, each repository associated with a particular user and each data item encrypted with a user encryption key associated with that user, and one or more client devices, each client device having a user keychain stored thereon, each user keychain containing a plurality of keychain items including the user encryption key associated with that user and a user repository identifier for locating user repositories in the database; the method comprising: generating each of said plurality of keychain items for a particular user by applying a deterministic process to at least a first biometric code associated with said particular user; wherein, the deterministic process includes a first stage of combining the first biometric code with a plurality of cryptographic salts to create a plurality of intermediate codes; and a second stage of applying a predetermined one-way hash algorithm to the intermediate codes to generate the plurality of keychain items; encrypting user data items using the user encryption key; locating a user repository using the user repository identifier; and storing the encrypted user data items in a user repository.

In a second aspect, the present invention provides a database system for secure storage and communication of information, the system comprising: a database for storing user repositories containing encrypted user data items, each repository associated with a particular user and each data item encrypted with a user encryption key associated with that user; and one or more client devices, each client device having a user keychain stored thereon, each user keychain containing a plurality of keychain items including the user encryption key associated with that user and a user repository identifier for locating user repositories in the database; wherein the database system is arranged to: generate each of said plurality of keychain items for a particular user by applying a deterministic process to at least a first biometric code associated with said particular user, the deterministic process including a first stage of combining the first biometric code with a plurality of cryptographic salts to create a plurality of intermediate codes, and a second stage of applying a predetermined one-way hash algorithm to the intermediate codes to generate the plurality of keychain items; encrypt user data items using the user encryption key; locate a user repository using the user repository identifier; and store the encrypted user data items in a user repository.

In a third aspect, the present invention provides a computer program or a suite of computer programs configured to carry out the method of the first aspect of the invention.

In a fourth aspect, the present invention provides a computer-readable medium having the computer program or suite of computer programs according to the third aspect of the invention stored thereon.

In a fifth aspect, the present invention provides a computing device configured to carry out the steps of the first aspect of the invention.

Further features of the present invention are defined in the appended set of claims. Advantages of these and other aspects of the present invention are recited below in the detailed description.

### Brief Description of the Drawings

The present invention will now be described, by way of example only, and with reference to the accompanying drawings, in which:
Figure 1 is a schematic diagram of a secure database platform in accordance with an embodiment of the present invention;
Figure 2 is a schematic diagram of a user device which forms part of the secure database platform of Figure 1;
Figure 3 shows access software for use with the user device shown in Figure 2;
Figure 4 shows an operator domain which forms part of the secure database platform of Figure 1;
Figure 5 is shows a keychain in accordance with an embodiment of the present invention;
Figure 6 is a schematic diagram of an enrolment terminal which forms part of the secure database platform of Figure 1;
Figure 7 shows enrolment software for use with the enrolment terminal shown in Figure 6;
Figure 8 is a flow chart showing a process enrolling a new user in the secure communications system shown in Figure 1;
Figure 9 is a flow chart showing a process of generating a keychain in accordance with an embodiment of the present invention;
Figure 10 is a flow chart showing a process of replicating a keychain in accordance with an embodiment of the present invention;
Figure 11 is a flow chart showing a process of regenerating a keychain in accordance with an embodiment of the present invention;
Figure 12 is a flow chart showing a process of renovating a keychain in accordance with an embodiment of the present invention;
Figure 13 is a flow chart showing a process of establishing a secure conversation in accordance with an embodiment of the present invention;
Figure 14 is a flow chart showing a process of sending notifications in accordance with an embodiment of the present invention;
Figure 15 is a flow chart showing a process of signing data items in accordance with an embodiment of the present invention; and
Figure 16 is a flow chart showing a process of issuing and updating documents in the system shown in Figure 1.

### Detailed Description of Embodiments of the Invention

### Secure Platform and User Identity

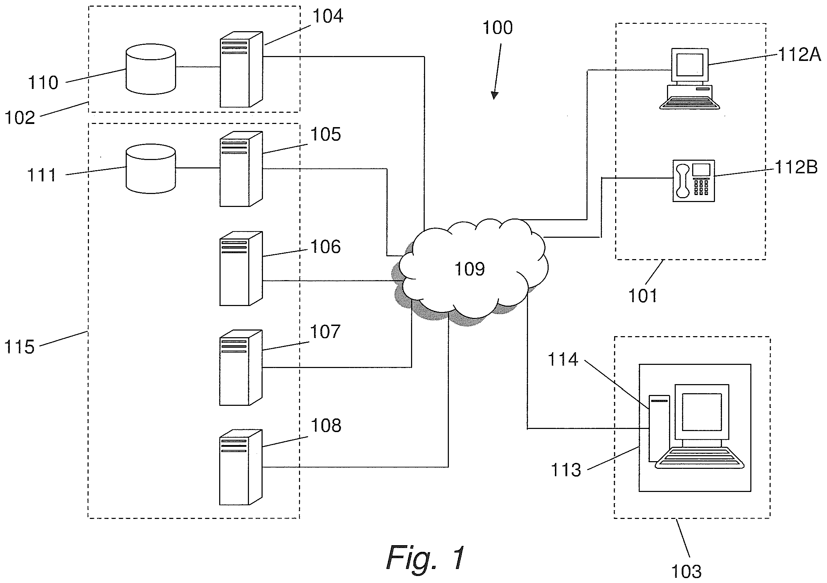

Figure 1 is an overview of a secure database platform 100. The secure database platform 100 includes four primary domains. The secure database platform 100 includes a user domain 101, an operator domain 102, an enrolment domain 103 and a hub domain 115. Users are individuals and organisations who wish to communicate with other users using the secure database platform 100. Operator organisations may, for example, be financial organisations such as banks. Operators provide the central components of the secure database platform, which enable users to communicate with each other by securely storing and sharing data. The hub domain 115 is administered by a platform administrator who provides certain common central elements of the secure database platform 100, as will be described in more detail below.

The operator domain 102 includes the systems hosted by the operators to enable user data to be stored and communications between users to take place. In the present embodiment, there is a single operator. It will be appreciated that there may be many operators, each providing competing service packages for access to a common set of services. The secure database platform 100 includes operator server 104. The operator server 104 is hosted by the operator. The hub domain 115 also includes a hub server 105. The hub server 105 is operated by the platform administrator. In addition to the above, the hub domain 115 includes a notification server 106, an authentication server 107 and a trusted source server 108. The operator server 104, the hub server 105, the notification server 106, the authentication server 107 and the trusted source server 108 are coupled to a public network 109. The public network 109 may be the Internet. The aforementioned servers may communicate with devices in the user domain, or each other, via the public network 109. The operator domain 102 also includes an operator main database 110, which is connected to the operator server 104. The operator main database 110 is for storing user repositories (described in more detail below). The hub domain 115 also includes a hub server database 111, which is connected to the hub server 105. The hub domain 115 also includes an enrolment database 116, which is connected to the hub server 105.

The user domain 101 includes user devices 112A, 112B. The user devices 112A, 112B are also coupled to the public network 109. The user devices 112A, 112B may be cell phones, tablet computers, laptop computers or desktop computers. In the present embodiment, the user devices 112A, 112B are computing devices such as those described above. It will be appreciated by the skilled person that the user devices 112A, 112B may also be multiple user devices such as vending machines, physical access devices such as turnstiles, or devices such as package tracking scanners. The user devices 112A, 112B may be coupled to the public network 109 via a local area network (LAN) or a wireless network.

The enrolment domain 103 includes an enrolment centre 113. It will be appreciated that the enrolment domain 103 may include multiple enrolment centres. The enrolment centre 113 is a physical location, typically run by an operator. It is where new users may sign up to use the secure database platform 100. The enrolment centre 113 includes an enrolment terminal 114. The enrolment terminal 114 may, for example, be a personal computer. The enrolment terminal 114 is also coupled to the public network 109. In the present embodiment, the enrolment terminal 114 is described as one which is operated by an enrolment officer. It will be appreciated that automated enrolment terminals may be used in which no enrolment officer is required. When a user is set up to use the secure database platform 100, a user repository is established on operator main database 110. This is where a user's details and documents are securely stored. The user repository is encrypted with a user encryption key, and located by a user repository identifier The user encryption key and the user repository identifier are stored only in a user keychain on a user device 112 and accessible only to the user. Accordingly, only the user is able access or locate their secure user repository. Further details of these aspects of the invention will now be described.

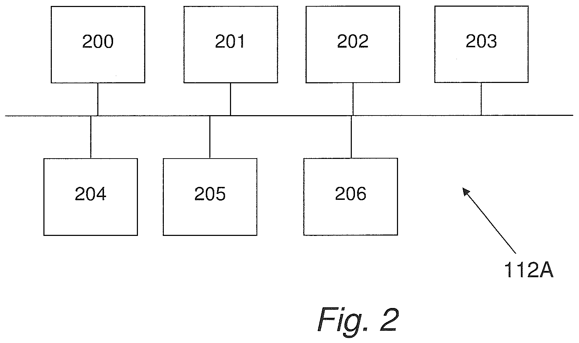

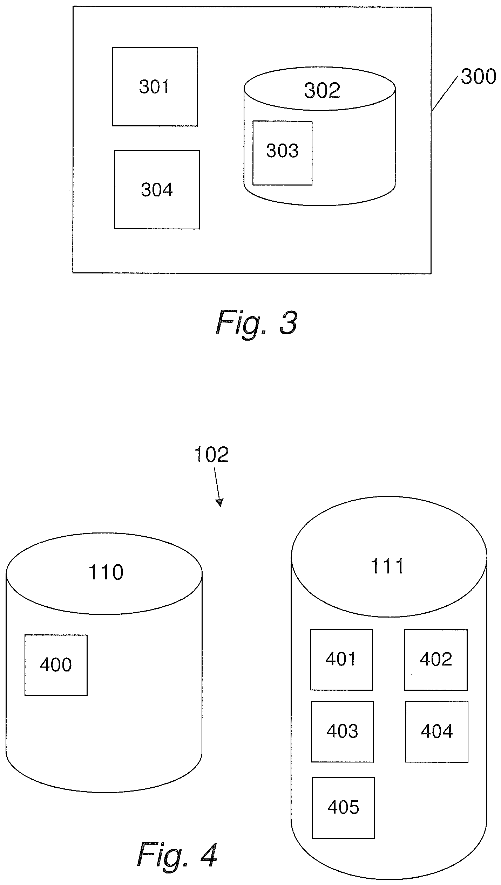

Figure 2 is a schematic diagram of a user device 112A. In this embodiment, the user device 112A is a general purpose personal computer. The user device 112A includes a processor 200, memory 201, data storage 202, a bus 203, a display 204, a keyboard 205 and communications interface 206. These components operate in the manner familiar to a person skilled in the art. The user device 112 includes secure platform access software 300. This is shown in Figure 3. The access software 300 is stored in data storage 202, and is configured to run on processor 200 when the user device 112 is in use. The access software 300 includes a control panel 301. The control panel 301 is a user interface which a user uses to operate the access software 300. The access software also includes a keychain store 302. The keychain store is used to store user keychains. In this example, the keychain store includes a single user keychain 303. The user keychain 303 may itself be encrypted using a passphrase or otherwise protected, for example using biometric authentication. The user keychain 303 may also be cryptographically bound to the user device 112, so that if it is copied to a different device, access to the keychain and therefore to user repository 400 will not be possible. The user keychain 303 contains several other elements, as will be described in more detail below. The user keychain 303 is created, recreated or renovated, solely from a user's biometric information. Further details of the mechanism by which the user keychain 303 is created from biometric information will be described in further detail below. The access software 300 also includes a key generator 304, which will be described in more detail below.

Figure 4 shows various elements of the operator domain 102. In particular, the operator domain includes operator main database 110. The operator main database 110 includes user repositories. In this case, the operator main database 110 includes user repository 400. The user repository 400 contains user data which is encrypted using a user encryption key that is specific to a particular user, and only available to that user. No unencrypted user data ever leaves the user's own device. A benefit of this arrangement is that if a third party were to gain access to the user repository 400 they would not be able to decrypt the data without very considerable effort. Such effort would be required to decrypt each and every other individual repository, making bulk theft a practical impossibility provided that sufficiently strong encryption is applied. The user repository may be encrypted using a 256 bit AES algorithm, for example, and 512 bit algorithms and larger keys, or algorithms other than AES, may easily be deployed in the future as cryptographic standards change over time. Furthermore, the user repository identifier anonymises the user repository making it impossible to target high value individuals.

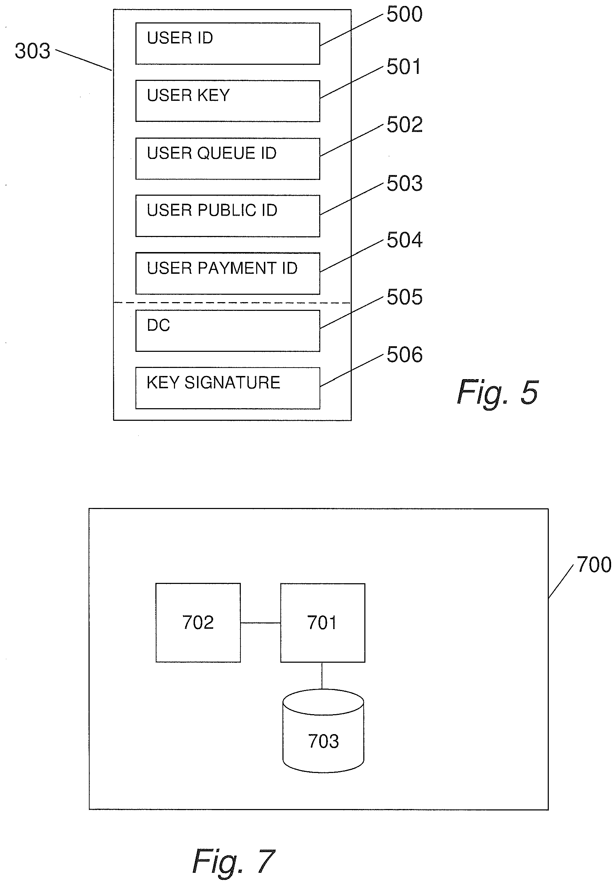

The user keychain 303 includes a number of items, each of which provides a different function when used in the secure database platform 100. Figure 5 shows user keychain 303 in accordance with an embodiment of the present invention. The user keychain 303 includes a user ID 500. The user ID 500 is used as the location index for the user repository 400. The user ID 500 is unique to a particular individual, and can not be associated with any other information stored in the operator main database or other databases. No information is stored anywhere in platform which may be used to identify the user. The user keychain 303 also includes a user encryption key 501. The user key 501 is used to encrypt user data stored in the user repository 400. Separate keys are used to encrypt data for communications with other users, as will be described in more detail below.

The user keychain 303 may include a variety of other indexes for a variety of purposes. In this example, the user keychain 303 includes a user queue ID 502, a user public ID 503 and a user payment ID 504. The user queue ID 502 is used as an index to a user queue. A user queue is a location where incoming data is placed for review by the user before it is accepted into a user's user repository 400. A user public ID 503 is an index to a user's non-private codes in the hub database 111. The user public ID 503 will be described in more detail below. The user payment ID 504 is another index which is used in banking applications, such as payment transactions. All of the above will be described in more detail below. Further encryption keys and indexes may be created for specific purposes. No key or index can be derived from or related to the set of other keys and indexes.

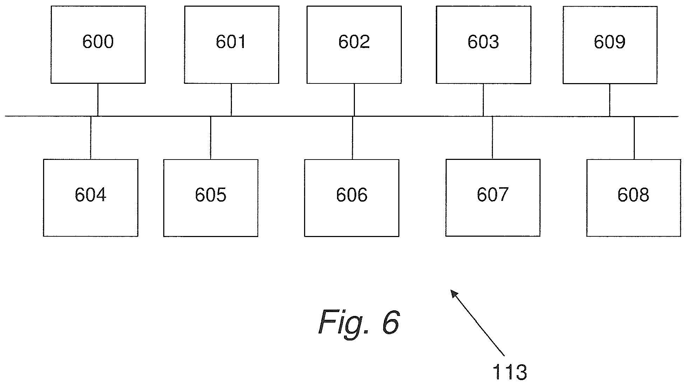

Figure 6 is a schematic diagram of the components of the enrolment terminal 114. In this embodiment, the enrolment terminal 114 is a general purpose personal computer. The enrolment terminal 114 includes a processor 600, memory 601, data storage 602, a bus 603, a display 604, a keyboard 605 and communications interface 606. Furthermore, the enrolment terminal 114 includes input devices including a document scanner 607, a digital camera 608, and a biometric sensor 609. These components operate in the manner familiar to a person skilled in the art. The enrolment terminal 114 includes enrolment software 700. The enrolment software 700 is shown in Figure 7. The enrolment software 700 includes an enrolment application 701, a keychain generator 702, and a temporary user information store 703. The enrolment software 700 is configured to create a user repository on the operator main database 110.

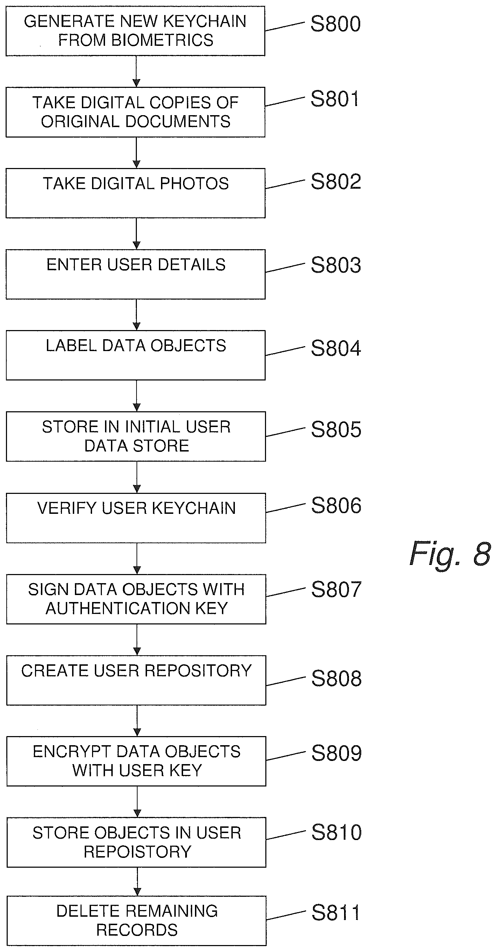

The process by which a user enrols with the secure database platform 100 will now be described with reference to Figure 8. A user enrols with the secure database platform 100 at the enrolment centre 113. The enrolment centre 113 is a secure trusted site which may be provided by one of the secure database platform operators. An enrolment officer at the enrolment centre 113 carries out the following steps. Firstly, a user keychain 303 is generated from a user's biometric information using the keychain generator (S800). The enrolment officer then verifies the user's original identity documents, takes digital copies of those documents, a digital photograph of the user and other identity related information. The operator responsible for enrolling a particular user will determine the minimum information requirements. Typically, this may include a birth certificate or passport. The enrolment officer then generates the necessary digital documents representing the original identity documents and other information (S801). These documents are stored in the temporary user information store 703. The enrolment officer then takes digital photos of the user (S802). The enrolment officer then enters various details regarding the user into the enrolment terminal 114 (S803). For example, the enrolment officer enters notification addresses (for example, email address and mobile number) as well as details from the identity documentation, such as a passport number. Each of the items which is loaded by the enrolment terminal 114 is labelled according to a structured naming scheme (S804). All of this data is stored in a user repository (S805).

The enrolment terminal 114 verifies the user keychain 303 for uniqueness (S806). The keychain 303 is then signed using the enrolment centres authentication key (S807). Each of the items created by the enrolment officer is signed using the enrolment centre's authentication key (S807). The enrolment terminal 114 instructs the operator server 104 to create user repository in the operator main database 110 (S808). Each of the data objects created by the enrolment officer is then encrypted using user key 501 (S809). The encrypted data is then stored in the user repository 400 (S810). Any and all of the records, including biometric information remaining on the enrolment terminal 114 are then securely deleted (S811).

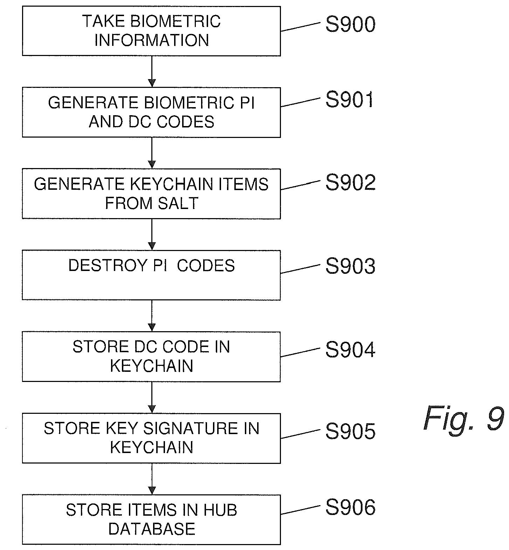

The mechanism by which user keychain 303 is generated will now be described with reference to Figure 9. The user keychain 303 is generated using a combination of a user's biometric information together with a set of fixed salt items. A user's biometric information is taken using known techniques and is inputted into biometric processing software in order to produce biometric codes (S900). The biometric processing software produces PI and DC biometric codes (S901), as is known to the person skilled in the art. The PI and DC biometric codes are randomised by the biometric processing software so that the same biometric identity information would create different biometric codes on different occasions. In addition to this, it is highly unlikely that a user's biometric identity information would be identical on any two given occasions. This property of the PI and DC biometric codes prevents them from being used to reconstitute a user's biometric information and also allows the codes to be renovated from the same biometric. Furthermore, the biometric codes have the property that if previously used biometric processed in combination with a stored enrolment DC, the resulting PI will exactly match the original PI. The above described features are all known from the prior art and are provided with third-party biometric processing software applications.

In this example the fixed salt includes five items of salt, corresponding to the five items in the user keychain 303. In the present example, the five items of salt are "SATOR", "AREPO", "TENET", "OPERA" and "ROTAS". Each item in the user keychain 303 is generated, in this example, by applying the 512-bit form of the secure hash algorithm (SHA) to the string addition of the user's PI and a particular item of salt (S902). In this example, the user ID 500 uses the salt "SATOR", the user key 501 uses the salt "AREPO", the user queue ID 502 uses the salt "TENET", the user public ID 503 uses the salt "OPERA" and the user payment ID 504 uses the salt "ROTAS". As soon as the keychain items have been calculated, the PI is securely destroyed (S903) with no copies being retained. In addition to the above, the DC biometric code 505 is also stored in the user keychain 303 (S904). Finally, a key signature 506 is also stored in the user keychain 303 (S905). The key signature 506 is calculated as a hash of the string of all other elements of the user keychain 303. The key signature 506 is also signed by an enrolment officer during enrolment, as will be described in more detail below. The key signature 506 is used to verify the authenticity of the user keychain 303 to guard against forgery and any consequences of tampering or damage. The user public ID 503, the DC code 505 and the key signature 506 are all stored in the enrolment database 116 together with an operator ID for the operator with which the user is enrolled (S906). These items are stored in an enrolment record 401.

A full backup of the user keychain 303 may be taken for the user's safekeeping and this may or may not be in encrypted form. This may be in the form of a QR code printed on a sheet of paper, on a portable electronic storage device, or securely stored in the operator main database 110 in such a way that only the user may access it, as will be described in more detail below. Taking an unencrypted backup clearly introduces a security risk, and will only be performed at the user's informed choice. The user may take what steps they choose to safeguard the backup, for example by storing it at a secure site. The benefit of taking an unencrypted backup is that it would enable simpler recovery in cases of loss of keychain or forgotten password. As an alternative to taking a full backup of the full user keychain 303, a backup of the DC can be taken, which represents no risk of impersonation or data access should it fall into the wrong hands. However, it greatly facilitates the re-generation of the user keychain 303, as the hub server database does not need to be searched for the enrolment record 401.

The normal container for the user keychain 303 is an electronic file stored in keychain store 302 on a user device 112. This may be encrypted using an RSA key pair (e.g. using AES-256), with a passphrase known only to the user. An ID of the user device 112 (e.g. the hardware serial number) is bound into the encryption mechanism, so that the user keychain 303 can only be decrypted on that particular device, making compromise by copying the file impossible. The encrypted user keychain 303 may be securely copied by the user onto further user devices, such as smartphones or desktop computers, using the key replicator mechanism, which is described in more detail below.

For a period after the user has unlocked the keychain, the keychain remains unlocked for further use. This period is called the keychain timeout period and is specified by the user. The keychain timeout period may be of zero duration.

In case a user is placed under duress to unlock their keychain, a duress passphrase is available which the user may enter instead of the normal passphrase. The result of such usage is determined by the user's pre-set options, and may include suspending the keychain, or apparently normal operation but where no transaction is really executed, or calling the police to the user's registered address, or to an address determined from a registered IP address.

A user keychain may be created without the use of biometric codes. Such a keychain is called a light keychain. A secure random string is generated and used in place of the PI, as above, to create a light keychain. This has the advantage of convenience for the user as such a keychain can be created instantly by an online service and no visit to an enrolment centre or biometric sampling is required. Such light keychains however are not bound to the individual and therefore cannot provide biometric authentication of the user, and they cannot be regenerated in case of loss. Light keychains can be renovated in case of suspected compromise, and can provide many of the other functions of keychains. Light keychains can be upgraded for example to include identity and other data authenticated at an enrolment centre or notary public. Light keychains can be upgraded to fully functional keychains by a visit to an enrolment centre, where biometric information is captured and the keychain renovated in a similar manner to the renovation process described below. Light keychains may be generated using any string of bits. The string of bits may, for example, be a string of characters. The string of bits may be a securely generated arbitrary string of bits. Alternatively, the string of bits may represent a serial number, or other string of characters, associated with a particular item. For example, a chassis number from a vehicle, or a serial number associated with an RFID tag may be used.

### Keychain derivation

Access to user data stored in the user repository 400 can only be achieved through the use of valid decrypted user keychain 303. The user ID 500 is used to locate the user repository 400 and the user encryption key 501 is used to decrypt the data. Following enrolment, the user's keychain 303 may be derived in one of four ways, depending on the circumstances, as described below.

The most common method for everyday use is to decrypt the user keychain 303 on the user device 112. This is accomplished by the user supplying their passphrase, or else by presenting unlock biometrics. Further checks are then carried out. The integrity of the user keychain 303 is checked using the user key signature 506 on the user keychain 303. The DC code 505, the key signature 506, and the user public ID 503 are checked against the enrolment database 116, using the user public ID 503 as a lookup index. Only if all of these checks are passed will the authentication be verified.

Depending on user and application settings, a full biometric authentication may be required for a particular transaction (e.g. if it is large or important). In these cases, the above-described method will not be accepted as sufficient authentication. The user will be required, in addition to entering their passphrase or unlock biometrics, to present their live full biometric information for authentication. In this case, the user decrypts the user keychain 303 as described above, revealing the enrolment DC 505. The DC 505 is combined with the new biometric codes generated by the biometric software from the full biometric scan, to generate the a new PI, which is in turn used as described above to generate a user public ID. This is compared with the user public ID 503 stored in the user keychain 303. If these match exactly then the same further checks are carried out as described above.

If an unencrypted backup of the user keychain 303 exists, then it may be used to recover the user keychain 303 in a trivial manner. Its contents are then subjected to the same further checks as described above. This method may be used in combination with full biometric checks if required by the circumstances. In cases where the user keychain has been lost or destroyed, or the user has forgotten their passphrase, and no backup exists, it is still possible to re-generate the user keychain 303. This is described in more detail below.

These mechanisms result in various advantages. As well as convenience in everyday transactions, there are extra security options for sensitive transactions, as well as simple recovery from the backup and recovery from complete loss.

### Keychain Replication

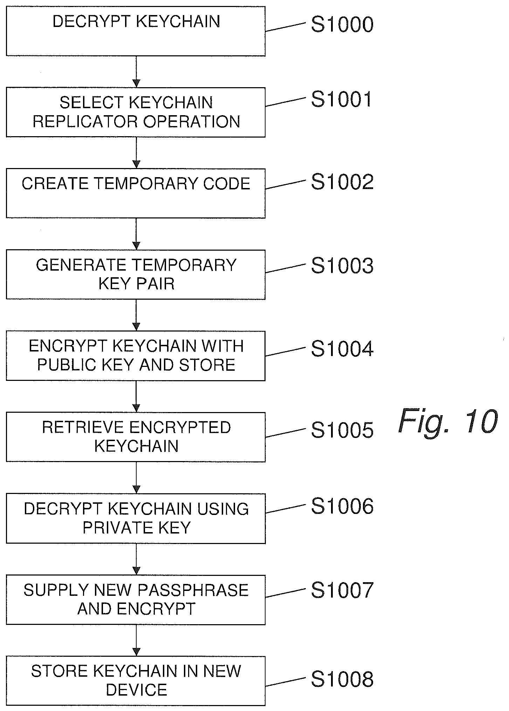

The secure database platform 100 includes a user keychain replicator mechanism. This will be described with reference to Figure 10. The purpose of the replicator mechanism is to copy a user keychain securely from one user device (e.g. a personal computer) to another user device (e.g. a smartphone). Encrypted user keychains are cryptographically tied to a particular user device. Accordingly, simply copying the file containing the user keychain to another device would not be effective. The replicator mechanism uses the secure database platform 100 itself to transport a user keychain from one user device to another.

Within the control panel 301 user device 112 the user first decrypts the user keychain 303 on user device 112 using the passphrase or unlock biometrics (S1000). Within the control panel 301 user interface, the user selects the keychain replicator operation (S1001). The user creates a temporary code (key tag) as a reference to the particular replicator operation (S1002). The key tag is not secret. The key generator 304 generates a temporary key pair (e.g. an RSA key pair) (S1003). The access software 300 encrypts the decrypted user keychain 303 using the temporary public key, and creates a key replication request record 402 in the hub server database 111 (S1004). The key replication request record 402 contains the key tag and the encrypted user keychain 303.

In a secondary user device 112, the user uses the control panel 301 to retrieve the key replication request record 402 using the key tag as a reference (S1005). The user supplies the public key from the temporary key pair, which decrypts the user keychain 303 (S 1006). The user supplies a new passphrase, (which may or may not be the same as that used in the first user device 112) which the access software 300 combines with the device ID of the secondary user device to encrypt the user keychain 303 (S1007). The encrypted user keychain 303 is stored on the secondary user device 112 in the keychain store 302 (S1008). The user may choose to delete the key replication request record 402 from hub server 105. Alternatively, the user may choose to leave it on the hub server 105 for installation on further devices or as a secure backup of the keychain. The key replication request record 402 is secure and furthermore not relatable to the user, even if access were gained to it.

The result of this mechanism is that the user has their user keychain 303 stored on a new user device 112 and is able to use secure database platform 100 from that device. The new encrypted user keychain 303 is tied to the new device, and the unencrypted user keychain 303 has not been exposed during the process.

An alternative mechanism (not shown), which achieves the same result and which may be more convenient, depending on the types of device involved, is to use PKCS 5 symmetric encryption to encrypt the user keychain while in transit. This mechanism requires the user to supply a temporary password to create a PKCS 5 encrypter on device A, and re-enter it on device B to create the corresponding decrypter. The process then proceeds in a similar manner to that described above. This alternative is equally secure, and may be preferable for certain devices, such as some portable devices, where making the temporary private key available to the device may be less convenient than entering the temporary encryption/decryption password on device A and later re-entering it on device B.

A further use of this replicator mechanism is to allow the transfer of a new keychain from the enrolment centre 103 to one or more of the user's devices 112A, 112B. The mechanism may also be used to create a secure backup of the keychain, simply by leaving it on the hub server 105.

### Keychain Regeneration and Renovation

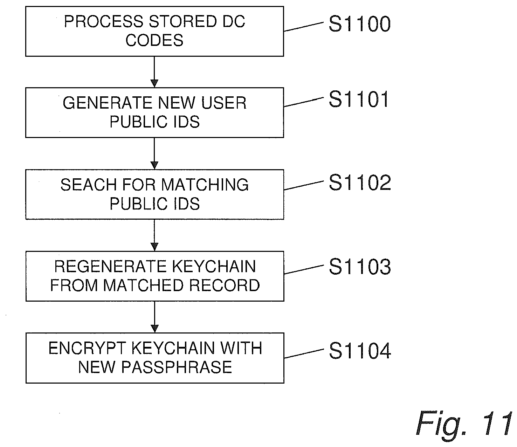

The secure database platform 100 provides a mechanism for recovering the user keychain 303 from loss of access to, or compromise of, the keychain. This mechanism will be described with reference to Figure 11. If the user keychain 303 is lost, damaged or if the passphrase is forgotten and no backup or copy of the DC exists, it is still possible to regenerate the user keychain 303 from live full biometric data alone. The user is required to present their live full biometric data at an enrolment centre. For every entry in the hub server database 111, the biometric software uses the stored DC 505, which is processed by the biometric software in combination with the fresh biometric sample (S1100). This produces a new user public ID for each entry in the hub server database 111 (S1101). Each new user public ID is compared with the record containing the old DC (S1102). If a match is found, the user keychain 303 is regenerated using the mechanism described above (S 1103). The user keychain 303 is then encrypted with a fresh key and passphrase (S 1104). A replacement user keychain 303 is then issued to the user. If a backup of enrolment DCs exists, the full scan of hub server database 111 is obviated, and the remainder of the process proceeds in the same manner.

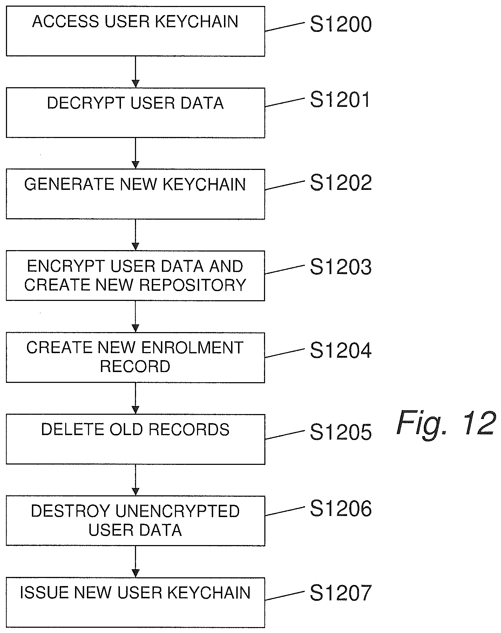

The secure database platform 100 also provides a keychain renovation mechanism. This mechanism will be described with reference to Figure 12. The renovation mechanism is used if the user keychain 303 has, or may have been, compromised (e.g. a device has been lost and the passphrase may have been overseen). If the user keychain 303 has been lost, then the steps of the keychain regeneration mechanism described above in connection with Figure 11 are first performed. If not, then the user keychain 303 is accessed using full biometric authentication, as described above (S1200). In either case, the user keychain 303 is referred to as the old user keychain and is used to decrypt all the elements of the user data in the user's repository 400 (S1201).

Live full biometric data is used to generate a completely new user keychain for the user as described above (S1202). This will be unrelated to old user keychain 303, because of the inherent randomisation in the biometric software, and the fact that enrolment DC will not be incorporated. This new user keychain is used to encrypt the user data, create a new user repository, add the freshly encrypted user data to the user repository (S 1203). Additionally, a new enrolment record is added to the hub server database 111 (S1204). The old user repository 400 and the old enrolment record 401 are deleted (S 1205). All record of the unencrypted user data is securely destroyed (S1206). The new user keychain is protected by a new key and passphrase and the new encrypted user keychain, together with any backups, are issued to the user (S1207). The result of the renovation mechanism is that the user has regained secure and sole access to the user data, and the possibly compromised user keychain 303 is rendered unusable.

### Conversation Protocol

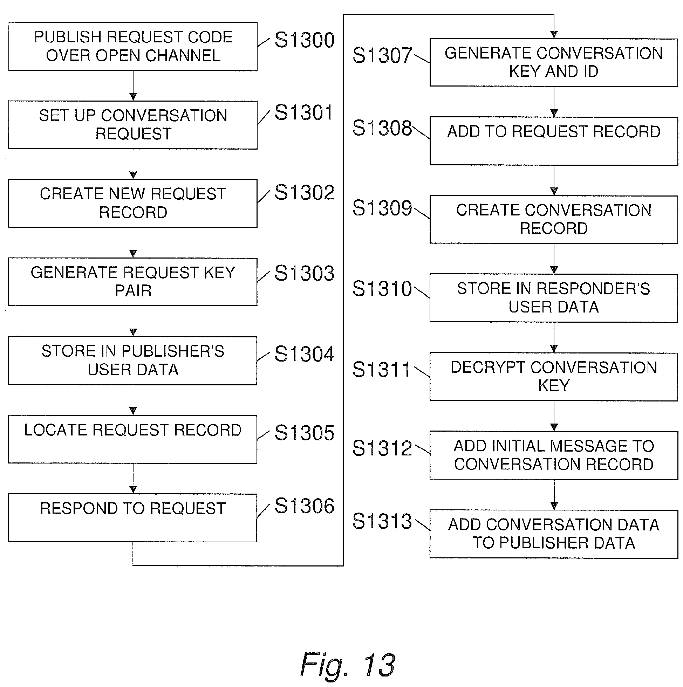

The mechanism by which users of the secure database platform 100 may communicate, exchange data, share identity and data authentication information, or undertake transactions will now be described with reference to Figure 13. The secure communication mechanism is referred to as the conversation protocol. The conversation protocol enables users to make connections with each other, communicate, exchange data and take part in transactions. Conversations may be established from an initial non-secret contact made via any communications channel. For example, a secure conversation may be initiated following a meeting in the street, a stickum left on a car windscreen, a contact over a social network, or an advertisement in a newspaper or on a website. The secure conversations are inherently anonymous, and yet authenticated and trustworthy information may be exchanged, which may, at the user's option, be non-anonymous. The secure conversation protocol is completely secure and is incapable of being associated with any of the users that are party to the conversation, even if unauthorised access were gained to the operator main database 110 or any other database. It is also able to provide anonymous, yet authenticated, communications over channels such as e-mail and SMS, and even to third parties that are not users of the secure database platform 100.

The secure conversation protocol is able to support a number of applications. For example, it may be used for negotiation of a sale/purchase, sharing of anonymised and authenticated documentation relating to goods, trusted payments, transactions requiring rich, authenticated data such as a mortgage application and social applications such as on-line dating. Anonymity is not mandatory in the protocol, and users may choose to provide any degree of personal or other data that they choose. For example, a user may wish to disclose and prove to another user, or to a non-user that they are over 18 or of a particular nationality. Details of the manner in which a secure conversation is established will now be described.

In any given secure conversation, the user who initiates the conversation is referred to as a publisher, and the user who joins the conversation is referred to as the responder. The first step in the initiation of a secure conversation is for the publisher to publish a request code over an open channel (S 1300). The request code may be provided over any suitable open channel. For example, it may be provided using a tweet, a small ad, an Internet chatroom post, or face-to-face with the responder. The channel is open in the sense that it does not form part of the secure database platform 100. The open channel may or may not, therefore, be secret between the publisher and the responder. The request code will typically be a plain text message such as an offer to buy or sell a particular item, and may or may not be accompanied by additional non-secret information such as a photo of the item. The request code and accompanying data is therefore not typically secure.

The publisher uses the control panel 301 on their user device 112 to set up a new conversation request in the secure database platform 100. The secure communications control panel 301 sends an instruction to the hub server database 111 to set up a new conversation request (S1301). The hub server database 111 creates a request record 403 within the hub server database 111 (S1302). The control panel 301 generates a freshly generated request key pair (e.g. an RSA key pair) with key generator 304 for use with the conversation (S1303). The request record 403 includes the request code and accompanying information *en clair,* a timestamp and the public key of the request key pair. In addition to the above, the operator server 104 encrypts the request code, the request private key and the timestamp with the publisher's user key 501 and stores them in the publisher's user data within the user repository 400 (S1304).

At this stage in the conversation set-up process, the request record 403 is essentially public. Anyone with access to a valid keychain of other access method is able to access the request record, whose request code acts as an index. Accordingly, anyone who accesses the request record 403 has access to the request public key.

Using a secure communication control panel 301 on their own device, a first responder locates the request record 403 using the request code (S1305). This may be done for example by performing a keyword search for the plain text request code.

Within the control panel 301 on their device, the first responder has the option to respond to the request. The first responder therefore selects the option to respond to the request (S1306). The first responder is given the option to provide an initial response message and data, which is the responder's response to the publisher's request. The secure communication control panel 301 then generates a fresh conversation key and a conversation ID (S1307). The conversation key may be a PKCS 5 symmetric key. The conversation key and the conversation ID are encrypted, together with the responder's initial response message and data and a timestamp, with the request public key from the request record 403. These are then added to the request record 403 in the hub server database (S1308). The hub server 105 also creates a conversation record 404 containing the conversation ID, the request code and the initial response, which are all encrypted with the conversation key (S1309). The conversation record is stored in the hub server database 111.

At this stage in the set-up process, the publisher may access the conversation ID and conversation key in the request record, using the request private key in the publisher's user data. Accordingly, the publisher has access the conversation key and may access the conversation record 404.

The hub server 105 encrypts the conversation key with the responder's user key 501 and stores it together with the encrypted conversation ID, further encrypted with the responder's user key 501 in the responder's user data in the responder's user repository 400 in operator main database 110 (S1310). At this stage, the responder now has access to the conversation ID and conversation key in their own user data, and may access the conversation record 404 in the hub server database 111. Accordingly, only the publisher and responder have access to the conversation record 404, and no linkage can be made by a third party between the conversation record, the request record and either user's data.

The aforementioned steps may be repeated by additional responders, each of which would result in the creation of a separate request record and a separate conversation record. Accordingly, a separate conversation key would be shared between the publisher and each individual responder.

The conversation key, conversation ID and the initial response are decrypted using the request private key stored in the publisher's user data (S1311). The initial response is then displayed to the publisher on their user device 112. The publisher is then given the option to complete the secure conversation set-up process by providing a publisher initial message, which may include accompanying information. The secure communication control panel 301 encrypts the publisher initial message and a timestamp with the conversation key and adds them to the conversation record 40 (S1312). The secure communication control panel 301 then encrypts the encrypted conversation ID and the conversation key with the publisher's user key 501 and stores these in the publisher's user data (S1313) in the user repository. At this stage, the conversation is ready for use, and the publisher and responder both have a record of the encrypted conversation ID and the conversation key in their user data.

It should be noted that all encryption and decryption of data is performed on the user's device, and not on any of the servers. The principle is that with a few specific exceptions (e.g. request codes and notification data) no user information ever exists outside the user's device in an unencrypted form.

The process of responding to a request may be performed by further responders. For each response a new request record and a separate conversation record are established. Each conversation record is shared between the publisher and an individual responder. For each conversation record, the publisher and the individual responder may continue to add messages, data objects, authentication stamps etc. The conversation record is private, cannot be associated with any user or user repository, and may be anonymous. Conversations involving more than two users can also be established by extension of the above mechanism that will be apparent to a person skilled in the art.

Each participant in a request or conversation may at any stage add a secure addressing capsule, as will be described in more detail below. This allows a user to be notified immediately by their chosen secondary channels (e.g. email or SMS) of new messages or other material added by another user. The result of this is mutually anonymised email and text services for example, between two authenticated users. Anonymity is not mandatory with the secure database platform 100 since each user may choose which personal and other data to disclose to the other user. Any user may choose to leave a conversation at any time, and will, thereafter, not receive any further data or notifications relating to the conversation.

### Transaction Encapsulation

As described above, the secure database platform 100 conversation protocol allows two entities to establish a secure channel of communication, anonymous by default, and yet capable of exchanging authenticated information. This information is chosen by the users, so that a conversation has no pre-defined content or structure. Transaction encapsulation allows structured transactions to be defined, published, responded to, and executed; using the conversation protocol for communication. This makes the secure communication platform 100 suitable for general purpose transaction processing, with the benefits of security, authenticity, privacy and trust, as well as convenience. As with unstructured conversations, structured transactions may be initiated via any open communication channel, and then processed across a range of desktop and mobile devices. A single conversation may comprise both structured and unstructured portions.

In order to carry out components of a structured transaction, a transaction capsule is required. The transaction capsule includes a transaction capsule specification, which is created by the user, and which defines the particular structured transaction component. For example, the specification may include information such as, which data is to be added to the conversation and how such data should be transformed before it is added to the conversation. For example, it may specify that a birth date should be converted into an "over-18" flag. The hub server 105 stores the transaction capsule specification in the hub server database 111, together with a transaction capsule code, a public transaction key, and user identification and authentication data. A transaction capsule record 405 is created in the hub server database 111. The request record, at any step, may include one or more transaction capsule codes, or the transaction capsule codes may be added to the request or conversation at a later stage by one of its users.

When a request or conversation record contains transaction capsule code, the transaction capsule is executed in accordance with the transaction capsule specification contained within the record. The user device of a responder includes a secure platform SDK which includes a transaction capsule class. This instantiates an object using the transaction capsule code to retrieve the transaction capsule specification from the transaction encapsulation record 405 stored in the hub server database 111. The object automatically fulfils the transaction according to its stored data requirements and rules. In some cases, such as a financial transaction, where the responder needs to specify a cash amount, the object will present a screen which prompts the user to input that data. The responder has a user setting that requires the secure communications control panel to display the data to be disclosed and to authenticate the publisher identity before execution is confirmed. The transaction capsule is also verifiable, as the transaction capsule is cryptographically tied to their keychain.

So-called power users, such as large retailers, can include executable/declarative code, and branded skins in their transaction capsules applications for sophisticated validation, processing and presentation. Such code will need to be vetted and signed by the platform administrator before release.

In summary, transaction capsules provide a simple means to provide for the bulk of human transactions, with great convenience for the all users, and with all of the secure database platform's strengths built in.

### Banking Application

An example of an application of the above described mechanisms will now be described. In this example, the secure database platform 100 is used by a retail bank and a customer. Both the retail bank and the customer are users of the system, and depending on the nature of any given conversation, either the bank or the customer may be the publisher. The retail bank's own banking software has an interface with the secure database platform 100.

The retail bank acts as the publisher in this first example of soliciting applications for a new bank account. The retail bank initiates a conversation request as described above. A request record 403 is created which, in addition to the elements mentioned above, includes a custom transaction capsule code. The associated transaction capsule specification is configured to gather data about the customer and to include product information, to help the customer decide whether or not they wish to open the account.

The applicant responds to the request in the same manner as described above in connection with Figure 13, by creating a conversation ID. The secure communication control panel 301 for the bank creates an account key (which may be a symmetric key) and an account ID. These are then encrypted with the request public key and are added to the new conversation record. Both of which will eventually become associated with the new account. The request public key will be used to extend secure communication to third parties, if required. The new account transaction capsule automatically extracts the data from the applicant's repository to open the account (e.g. authenticated passport scan, current address, as required by prevailing regulations) and the user payment ID 504. These items are then encrypted with the account key. With one click, the applicant has established a secure, private, (potentially) anonymous, authenticated secure conversation between the applicant and the bank. All of the data that the retail bank requires to set up a new account has also been provided.

The bank may now approve/reject the application or request further information via the secure conversation. When and if satisfied, the bank sets up the new account using the details provided by the applicant, securely notifies the applicant of the account number via the conversation, and the applicant is now a customer. The bank and the customer store the account information from the conversation in the usual manner described above.

The next process that will be described is making a deposit. When a user has opened an account, they may make a deposit by, for example, sending an EFT with a reference code on it to the retail bank. The customer sets up a new conversation request. The reference code is encrypted with the account key which was established during account opening. The bank's systems pick up the conversation request and acknowledge notice of the transfer and receipt of request. The customer completes the conversation set-up with the encrypted account number, which the bank can then verify. This creates a conversation, which can be used for further communication regarding the deposit. Once the funds have cleared, the bank confirms this to the customer via the conversation and the customer selects the application feature provided to update the customer account records in their user data. The bank, of course, maintains the master record of the account transactions and balance, and the user's records shadow the master account as a convenience for the customer.

Withdrawals are executed in an analogous manner to deposits, with the customer providing details of the amount and destination of funds securely using the conversation protocol.

The secure database platform 100 may also be used to negotiate payments between two retail bank customers directly. In this case, the parties agree on a request code that they may have set up over any open channel. The open channel may be non-secure and non-authenticated. When each party is satisfied with the terms of the transaction, they each select to commit the transaction from the secure database platform 100 banking application. The second 'commit' causes a linked pair of separately encrypted transactions to be sent to the bank, which will, upon successful processing, notify each customer. All balances are maintained as before. Note that the two customers, may, if permitted by prevailing regulations, conduct such a transaction anonymously.

The secure database platform 100 may also be used to carry out payments between a retail bank customer and a non-customer. This is also straightforward, and the payment negotiation proceeds as described above. Additionally, the non-customer must provide their bank's details, which they can do securely, by encrypting these details with the account public key, which is supplied by the other party.

The secure database platform 100 may also be used to carry out electronic cash (eCash) transactions. A portion of the customer's funds is segregated for eCash purposes, which are accounted for internally within the customer's user data. The retail bank only sees aggregate transfers into the eCash sub-account, but not the individual transactions. This is analogous to cash withdrawals from an ATM or to an electronic payment card.

The standard facilities of the secure database platform 100 banking software package used by the bank will handle normal features such as balance maintenance, interest payments and overdrafts. Bank statements are issued via the notifications server described below, or even by post if required.

An advantage of the secure database platform 100, in the context of the banking example, is that the conversation mechanism is more secure than using a plastic payment card. This is because it is the customer that is authenticated rather than the payment card. A payment card may be borrowed, cloned or stolen, whereas the secure conversation may not. The secure database platform 100 thus provides a flexible banking system that can perform all normal retail banking functions and comply with prevailing regulations.

Another advantage of the mechanism is that it provides an eCash system that is anonymous, if required. The mechanism also enables interbank transactions. Transactions may also be initiated over any medium, whether that be a merchant website, a phone call, a meeting in a bar, a social network, an SMS etc. Levels of trust, authentication, security and privacy can be set to meet both parties' requirements for the individual transaction.

The secure database platform 100 is sufficiently flexible to adapt to different banking regulations in different jurisdictions. For example, in Switzerland, traditionally, banking can be completely anonymous so that the bank does not know the identity of its customer. Instead, the bank just knows a number for the bank account. As noted above, the secure database platform 100 supports anonymity, but still allows authentication in interactions between users. By contrast, for example, the FSA in the UK insists that banks "know their customer" and there exists a system of rules at the transaction level to detect money laundering and other criminal activity. As seen above, the secure database platform strongly authenticates identity and can produce authenticated data in support of any transaction.

This flexibility in the secure communication 100 platform means that a banking software application can enforce rules and regulatory reporting to satisfy a wide range of regulatory environments. The inherent features secure database platform 100 can provide the appropriate level of identity and data authentication at each interaction. They also make transactions such as opening a new account much more convenient, since strong authentication can be effected without a visit to a bank with a sheaf of notarised documents.

### One-sided Transactions

Structured transactions are carried out using the mechanisms described above. A first type of structured transactions is one-sided structured transactions. These are transactions where the publisher does not have a secure identity. Such transactions may be useful for simple transactions such as allowing someone to prove that they are over 18 in order to enter a bar. However, one-sided structured transactions can also support more complex functions. In these cases, communication to the publisher (e.g. a bar owner) is via traditional channels, such as email or SMS. Encryption and authentication by and for the publisher are of course not available in one-sided transactions.

Structured transactions, using transaction encapsulation, can be set up by any user of the secure communication platform. As noted above, this is done by publishing a transaction capsule. Within the secure database platform control panel, a user selects what they need for a particular transaction. This may be done from simple lists, driven by a set-up wizard. For example, the transaction may include standard authenticated user data items such as age, nationality and portrait. All of this data is stored in user data in the user's repository when a user first enrols with the system or subsequently adds authenticated information. The transaction may include certain validation rules, such as "male and over 25". The structured transaction may define data disclosure and encryption rules. The structured transaction may define an anonymised addressing capsule, further details of which are provided below. The structured transaction may define a financial amount (and where to pick it from, if not a fixed sum, e.g. from an XML tag on a checkout page of an ecommerce website). The structured transaction may define a destination for funds, as described in more detail below. Finally, it may specify the user's current location (e.g. for taxi pickup).

### One-sided Transactions Applications

Some examples of one-sided structured transactions are as follows:
- The platform 100 may be used to make donations to charity. For example, an advertisement on a bus says "Give a fiver to Charity X now!". The advertisement includes a QR code. The user points their phone camera at the advertisement, and the secure database platform 100 automatically completes the transaction between the user and Charity X by means of the transaction capsule code inscribed in the QR code.
- The platform 100 may be used in a social context, for example to enable someone to put themselves on a guest list in a bar. For example, beside the queue to get into a nightclub, a sign reads "Men: £7 at the door, over 25s only; Women: half price if under 21. Message: Boogas421". The customers enter the codeword into their control panel on their cellular phones, which automatically authenticates their age and sex, executes the correct payment and sends an MMS with their photo to the doorman's phone.

- The platform 100 may be used to provide shoppers with discounts in return for using the secure database platform, which may be cheaper for the retailer. A shopper is on his home computer is browsing an online store. At the checkout screen is a button: "Save £1.26 - pay with the secure database platform". The user clicks the button and the transaction is carried out using the secure database platform 100.
- The platform 100 may be used for replacement of important documents. For example, if someone has booked a holiday including a rental car and realises their driving licence has expired a few days before they travel, the platform 100 can be used to arrange a quick replacement. The user goes the DVLA (DVLA - the government body responsible for issuing driving and vehicle licences in the UK) website and clicks a "replacement driving licence" button. The secure database platform 100 will send all the necessary authenticated information to the DVLA. In this case, the DVLA may still require full biographic information to issue the driving licence. Accordingly, the user may visit a local enrolment centre to provide this. The driving licence is then delivered a few days later.
- The platform 100 may also be used by parents. For example, if one of the parents' children has stayed out too late with some new friends, and isn't entirely sure where they are, the parent can select a taxi service from their cellular phone. A car from a firm that the parents trust is automatically ordered. The car is paid for on the parents' account, and the driver is automatically made aware of the child's current location for pick up and of the home destination postcode.
- The platform 100 may also be used as a single transaction profile for online shopping. It is inconvenient, for many people, to fill out their details and create a new account with another password, every time they go shopping online. Using the secure database platform 100, the user selects the items they wish to purchase and clicks the secure database platform button. The secure database platform securely and authentically provides all the required data to the online shop, sets up a user name and a strong password (which the platform remembers) and securely pays the online shop. The user is only prompted for any special delivery instructions. Next time a user shops at that online store, the secure database platform automatically logs them in.

Other applications of the secure database platform 100 will be apparent to a person skilled in the art.

### Notification Service

The secure database platform 100 includes a notifications service. The purpose of the notification service is to send messages to users by conventional channels such as email, SMS and MMS. The notification service may be used, for example, to provide notification to a user that their user data has been accessed. The service may be used to advise a user of session events in their account. In the case where a user's keychain has been compromised, they will receive notifications and can take timely action to block the account, or block only the device in question. The service may also provide confirmation messages to provide a simple and immediate record of activity for future reference. The service may also be used to provide messages from other users. For example, a user may be notified by an addition to a conversation. A user may also be notified on particular events, such as issue of a bank statement.

There are two special requirements for notifications. Firstly, they must not expose secret data or allow secure user identity information to be linked to identifiable information. Secondly, it should not be possible for a malefactor to interfere with their transmission or destination. The second requirement implies that the notifications cannot be sent directly from the device, since a malefactor might tamper with the device or its communications to prevent or divert sending. On the other hand, if the notification is sent from the hub server 105, then the hub must know the user's address (e.g. email) and user identity simultaneously, which violates the first requirement.

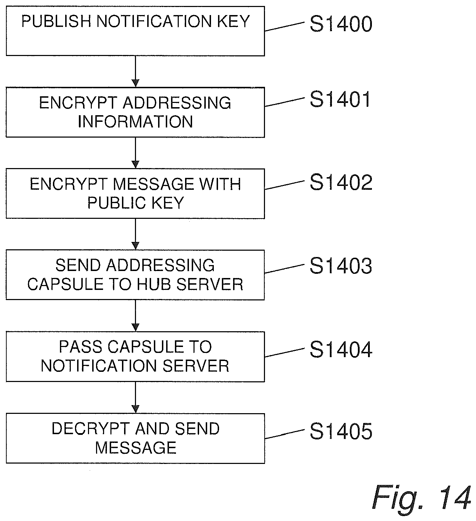

The process of sending a notification will be described with reference to Figure 14. The secure database platform 100 includes a separate notification server 106 to resolve this dilemma. The notifications server 106 publishes a public notification key, which is stored on the hub server database 111 (S1400). A secure communications application on a user device retrieves this and uses it to encrypt the addressing information retrieved from user data from the user repository 400 (S1401). The result is called an addressing capsule. The message content is also encrypted with the notification server public key (S1402). The encrypted addressing capsule and the encrypted message are sent to the hub server 105 (S 1403). The hub server 105 passes the addressing capsule and the message content to the notifications server 106 (S1404). The notification server 106 decrypts the message and the addressing capsule using the notification server private key and sends this information to a notifications gateway (e.g. SMS or email) for despatch (S1405). A user may place an addressing capsule on a conversation. If they do so, conversation protocol uses it to send notifications in a similar manner to that described here.

### Authentication of Entitles and Data

In order for a user to sign data items, a signature key pair (e.g. an RSA key pair) is stored in user data in the user repository 400. By using their signature key pair, the source, date, authenticity and integrity of a data item may be trusted by the recipient (assuming the receiver trusts the user and any previous authenticators). The user's keychain 303 includes a user signature ID (not shown). The user signature ID is stored in a table in the hub server database 111 together with the public signature key of the signature key pair.

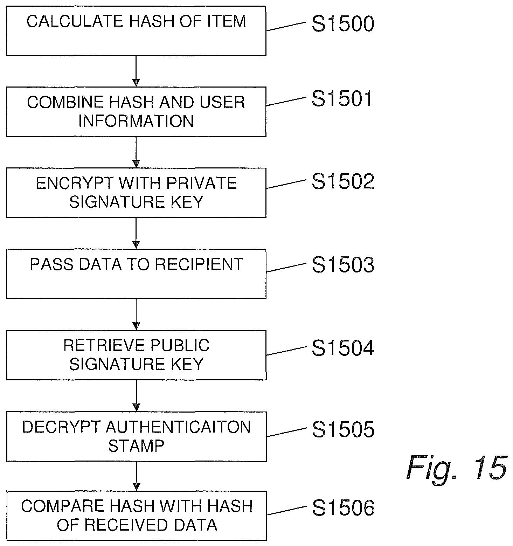

The process of signing a data item will be described with reference to Figure 15. To sign a data item, a hash of the item and an authentication component is calculated (S1500). The hash is combined with the user's choice of information items (e.g. their name, the current date etc) (S1501). The result is encrypted with the private signature key of the signature key pair (S1502). This results in an authentication stamp. The authentication stamp and the user signature ID are passed to the data recipient along with the data item (S1503).

To authenticate the data item, the recipient retrieves the public key (S1504) using the user signature ID and decrypts the authentication stamp to reveal the signing user's information items (S1505). The recipient takes a hash of the data received and compares it with the hash in the decrypted authentication stamp to verify that the data has not been tampered with or damaged (S1506). If the authentication stamp contains authentication stamps from third parties, then these can be processed successively as required by the receiver.

For the general individual user, signing is useful to prove integrity and a precedence date (e.g. for a work of art). It is also the basis for control and tracing of data after it has been disclosed, as described in more detail below. It provides a mechanism for third-party authentication when the 'user' is not a human individual but an organisation. This is especially important if it is one that issues official documents and information, such as an embassy or a university. Such organisations are called trusted sources. Trusted sources are issued with a normal user keychain, and an appropriate set of enrolment information, including their signature key. Unlike a normal keychain however, these are bound into a secure component of an authorisation server. The process is strictly controlled, being conducted jointly by the platform administrator and a suitable 'watchdog' such as a major accounting firm or a national audit office, both of whom sign the public key using authentication stamps.

Individuals may create more than one signature key for use in different roles, for example if they are directors of more than one company. The public keys have a sequence number to allow them to be distinguished in the user data and the hub server database 111. This is passed along with the user signature ID. The trusted source allows its officers authenticated access to the authorisation server by issuing a cryptographic token authorised by the supervisor and the server. An officer will first sign a new digital driving licence (for example) with their appropriate signature key, and then send it to the trusted source server to be signed by the trusted source. The result is that the driving licence is signed and sealed by the trusted source and the source is non-repudiably traceable back to the issuing officer. The authentication stamps will accompany the licence throughout its life, and allow recipients of it to verify its source and integrity.

This signing mechanism can be extended to more than two signatories. In situations where a larger number of equal-ranking signatures is required, for example a company board resolution, a parallel rather than sequential mechanism is available. In the example, the company secretary would issue the document via a secure conversation request, and members would sign individually, perhaps with the chair signing the whole package to complete the process.

In cases of compromise, rogue officers and the like, user signature IDs for trusted sources or for individual officers may be revoked by setting a flag and optionally an effective date on the hub server database 111, so that attempts to authenticate with the revoked key in future will fail, and invalidating the related data or document.

### Direct Issuance of Documents and Updates

We have seen above how authenticated documents may be created, and later verified by their recipients. The secure database platform 100 also includes a mechanism for providing a document, and document updates to a user. For example, the Driver and Vehicle Licensing Agency may be a trusted source. The DVLA may wish to issue a driving licence as a principal data object to a user. A document update may include adding speeding penalty points to the licence.

Important requirements of the mechanism are as follows. The trusted source should receive only the minimum amount of user data required to accomplish their work. They should not know other user data, such as the user queue ID for example. The trusted source should have no power to access user data.

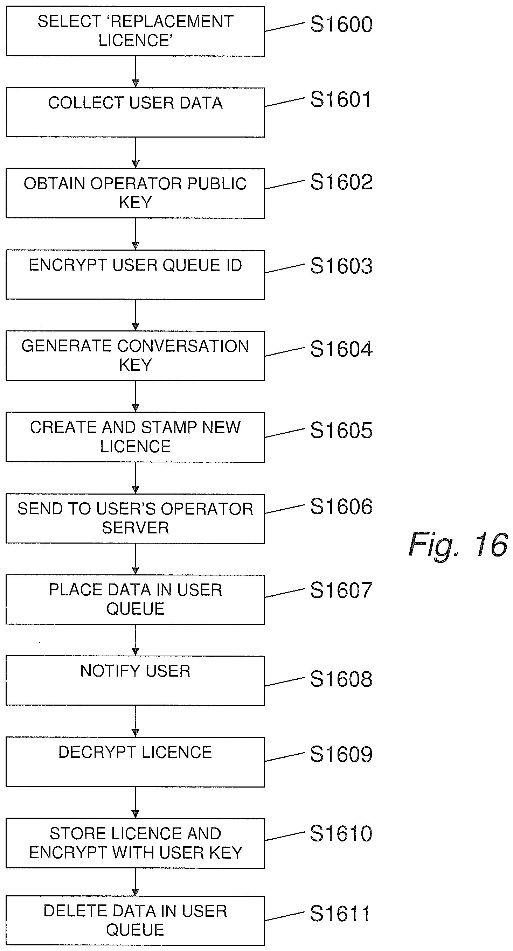

The process of issuing and updating documents will be described with reference to Figure 16. In the present case, the data must be kept current, e.g. by timely additions of penalties for use by insurance companies. For example, a user may own a current paper driving licence, which was loaded into the secure database platform 100 when they enrolled. The DVLA may issue fully digital licences in future.

To initiate the process of issuing a replacement digital licence, the user goes to the DVLA website, which has a 'replacement licence' button. The user clicks the 'replacement licence' button, which launches a transaction capsule (S1600). The transaction capsule specification has instructions to carry out various steps. Firstly, the transaction capsule collects current licence information and current home address from user data (S1601). Secondly, the capsule obtains the public key of the user's operator (S1602). The operator key is used to encrypt the user queue ID 502 (S1603). Thirdly, the capsule generates a conversation key which is protected by the public key provided by the transaction capsule (S1604). With one click, the user has provided all the necessary information, provided a private return address being the user queue ID 502, for the new licence, and shared a secret key with the DVLA, for use in further interactions.

The DVLA creates a new digital licence and stamps it as described above (S1605). The licence and stamps are then encrypted with the conversation key and sent to the user's operator server 104 (S1606). The operator server 104 cannot read any of the data, but is able to decrypt the user queue ID and so place it in the user's queue (S1607). The user is then notified by SMS or email using the notification server that their licence is ready for review and they open the control panel on their device to look in their queue (S1608).

The user's device decrypts the licence for the user (S1609). If the information is correct, the user accepts the licence into the driving licence section of their user data, which process encrypts it with the user key 501 (S1610). The item is now automatically deleted from the user's user queue (S1611). The process of updating a document is the same as issuing a document. For example, if the user is caught in a speed trap, the police notify the DVLA, which issues a licence update via the same queue process described above.

Suppose that the user has to renew their insurance, and first goes to their insurer's website and launches the transaction capsule for renewal. Sadly for the user, the secure database platform 100 always checks the user queue for the presence of pending updates before providing a document to a third party, and the renewal process fails. The user is thus forced to accept the points onto their licence if they want to get insurance. This section has described a general mechanism for the secure and private issue and maintenance of authenticated official documents, even where such maintenance is unwelcome to the user.

### Data Disclosure Control and Traceability

The secure database platform 100 includes mechanisms to record the purpose and circumstances of original disclosures, and their intended recipients. The platform allows the user to set rules for further disclosure of authenticated data. It also creates a permanent record of any further disclosures. As described above, every item of user data is accompanied by a set of authentication stamps. As a minimum, data includes the user's own stamp, but for 'official' data such as a educational qualification, third party stamps that allow a recipient to trust the data may be included.

The secure database platform 100 treats a data object and its stamps together as an indivisible item. Users cannot, within the platform, copy data independently from its stamps. The platform also treats complex data objects, composed of less complex objects, as a single indivisible unit. We use the term 'unit of disclosure' to mean a set of data, which may be complex and diverse, that is to be treated as a single unit with an overall authentication stamp set by the user at the point of disclosure. When a user makes disclosure of a unit of data, they may include certain information and settings within the authentication stamp.

For example, these settings may include the purpose of disclosure, recipient of disclosure, date of disclosure, self-destruction date (when the data will become inaccessible to recipients), permission to make further disclosures for a stated purpose, plus further conditions such as "no disclosure except to an authentically identified recipient" or "disclosure only permitted within trusted source organisation".

Within the secure communication platform, this authentication stamp is inseparable from the unit of disclosure, and the unit itself is indivisible. Of course, data can be extracted from unit of disclosure, but in that case it will lose its capability for authentication. The consequences of this are discussed further below.

If a recipient of a unit of disclosure wishes to make a further disclosure, the system will first check the rules and conditions in the original unit of disclosure. If the desired disclosure is permitted, then the system adds a new authentication stamp to the unit of disclosure, identifying the discloser and the new recipient, along with the date, and then makes the disclosure, for example via a conversation. The discloser may place additional restrictions on the disclosure, such as "no further disclosure permitted" and these will additionally be enforced further down the disclosure chain.

As a result of this mechanism, authentication and validation of a user's data is only possible by a recipient if it is accompanied by its full collection of authentication stamps, and has not self-destructed. The original purpose and rules of disclosure are documented. Portions of the unit of disclosure cannot be disclosed out of context. All further disclosures are documented so that authenticated data can always be traced back to its source. The unit of disclosure and its authentication stamps are protected from tampering or damage. This means that regulators and recipients are able to verify positively that data is authentic, intact and legitimately acquired.

If data is extracted from the secure database platform 100 environment, which of course cannot ultimately be prevented, it will lose its authenticity, and thus much of its value. Also, with this tracing mechanism, it will be possible for regulators to hold the possessors accountable for their treatment of personal data.

Most developed countries have laws to regulate the gathering, use, disclosure and retention of personal data, yet it seems that in practice, data is increasingly used for purposes for which it was not originally disclosed, and is passed on and around the world to help target individuals for marketing, and also for more worrying uses. And, as mentioned earlier, the data may not be held securely, allowing mass escapes and thefts of personal data, which is then available for crime. The enforcement difficulties that regulators have stem from the fact that digital data can so easily be copied and transmitted, with no record of the circumstances and conditions of its original disclosure, nor trace of the hands through which it has successively passed.

The term "one-way" which is used in the context of applying deterministic function is well understood by a person skilled in the art of computer science. In particular, it is used to refer to a "one-way" function in which it is difficult if not impossible to compute the input from the output.

Features of the present invention are defined in the appended claims. While particular combinations of features have been presented in the claims, it will be appreciated that other combinations, such as those provided above, may be used.

The above embodiments describe one way of implementing the present invention. It will be appreciated that modifications of the features of the above embodiments are possible within the scope of the independent claims.

## Claims

1. A computer implemented method of generating and using a keychain in a database system for secure storage and communication of information, the database system comprising:
a database for storing user repositories containing encrypted user data items, each repository associated with a particular user and each data item encrypted with a user encryption key associated with that user, and
one or more client devices, each client device having a user keychain stored thereon, each user keychain containing a plurality of keychain items including the user encryption key associated with that user and a user repository identifier for locating user repositories in the database;
the method comprising:
generating each of said plurality of keychain items for a particular user by applying a deterministic process to at least a first biometric code associated with said particular user; wherein,
the deterministic process includes a first stage of combining the first biometric code with a plurality of cryptographic salts to create a plurality of intermediate codes; and a second stage of applying a predetermined one-way hash algorithm to the intermediate codes to generate the plurality of keychain items;
encrypting user data items using the user encryption key;
locating a user repository using the user repository identifier; and
storing the encrypted user data items in a user repository.

2. A method according to claim 1, further comprising: generating a key signature by applying a hash function to the at least one item of the keychain; and storing the key signature in the keychain.

3. A method according to claim 2, wherein the key signature is signed by an authorised user during enrolment.

4. A method according to any preceding claim, further comprising: encrypting the keychain with at least one of a passcode and user biometric data.

5. A method according to claim 4, wherein said encrypted keychain is cryptographically tied to a user device.

6. A method according to any preceding claim, wherein the method further comprises:
generating the first biometric code from a user's biometric information.

7. A method according to claim 6, further comprising: generating a second biometric code from a user's biometric information; and storing the second biometric code in said keychain.

8. A method according to claim 7, wherein said first biometric code is generated from the second biometric code and a user's biometric information.

9. A method according to any of claims 6 to 8, further comprising: deleting the first biometric code after said keychain has been generated.

10. A database system for secure storage and communication of information, the system comprising:
a database for storing user repositories containing encrypted user data items, each repository associated with a particular user and each data item encrypted with a user encryption key associated with that user; and
one or more client devices, each client device having a user keychain stored thereon, each user keychain containing a plurality of keychain items including the user encryption key associated with that user and a user repository identifier for locating user repositories in the database; wherein
the database system is arranged to:
generate each of said plurality of keychain items for a particular user by applying a deterministic process to at least a first biometric code associated with said particular user, the deterministic process including a first stage of combining the first biometric code with a plurality of cryptographic salts to create a plurality of intermediate codes, and a second stage of applying a predetermined one-way hash algorithm to the intermediate codes to generate the plurality of keychain items;
encrypt user data items using the user encryption key;
locate a user repository using the user repository identifier; and
store the encrypted user data items in a user repository.

11. A system according to claim 10, wherein the encrypted user record includes information regarding the identity of a user.

12. A system according to claim 11, wherein the encrypted user record includes authenticated copies of identity documents.

13. A system according to any of claims 10 to 12, further comprising a server, wherein the database is stored on the server.

14. A computer program or a suite of computer programs configured to carry out the method of any of claims 1 to 9.

15. A computer-readable medium having the computer program or suite of computer programs according to claim 14 stored thereon.

16. A computing device configured to carry out the steps of any of claims 1 to 9.

## Patentansprüche

1. Computerimplementiertes Verfahren zum Generieren und Verwenden eines Schlüsselbundes in einem Datenbanksystem zum sicheren Speichern und Kommunizieren einer Information, wobei das Datenbanksystem aufweist:
eine Datenbank zum Speichern von Benutzerverzeichnissen, die verschlüsselte Benutzerdatenelemente enthalten, wobei die Verzeichnisse jeweils mit einem bestimmten Benutzer assoziiert sind und die Datenelemente jeweils mit einem mit diesem Benutzer assoziierten Benutzerverschlüsselungsschlüssel verschlüsselt sind, und
eine oder mehrere Clientvorrichtungen, wobei die Clientvorrichtungen jeweils einen darauf gespeicherten Benutzerschlüsselbund aufweisen und der Benutzerschlüsselbund jeweils eine Vielzahl von Schlüsselbundelementen enthält, die den mit diesem Benutzer assoziierten Benutzerverschlüsselungsschlüssel und einen Benutzerverzeichnisidentifikator zum Auffinden von Benutzerverzeichnissen in der Datenbank aufweisen;
wobei das Verfahren aufweist:
Generieren jeder der Vielzahl von Schlüsselbundelementen für einen bestimmten Benutzer durch Anwenden eines deterministischen Prozesses auf mindestens einen mit dem bestimmten Benutzer assoziierten ersten biometrischen Code; wobei
der deterministische Prozess eine erste Stufe zum Kombinieren des ersten biometrischen Codes mit einer Vielzahl von kryptographischen Salts, um eine Vielzahl von Zwischencodes zu erzeugen; und eine zweite Stufe zum Anwenden eines Einweg-Hashalgorithmus auf die Zwischencodes, um die Vielzahl von Schlüsselbundelementen zu generieren, aufweist;
Verschlüsseln von Benutzerdatenelementen unter Verwendung des Benutzerverschlüsselungsschlüssels;
Auffinden eines Benutzerverzeichnisses unter Verwendung des Benutzerverzeichnisidentifikators; und
Speichern der verschlüsselten Benutzerdatenelemente in einem Benutzerverzeichnis.

2. Verfahren gemäß Anspruch 1, das ferner aufweist: Generieren einer Schlüsselsignatur durch Anwenden einer Hashfunkton auf das mindestens eine Element des Schlüsselbundes; und Speichern der Schlüsselsignatur im Schlüsselbund.

3. Verfahren gemäß Anspruch 2, wobei die Schlüsselsignatur durch einen autorisierten Benutzer während einer Anmeldung signiert wird.

4. Verfahren gemäß einem der vorhergehenden Ansprüche, das ferner aufweist: Verschlüsseln des Schlüsselbundes mit mindestens einem, Passwort und biometrischen Benutzerdaten.

5. Verfahren gemäß Anspruch 4, wobei der verschlüsselte Schlüsselbund kryptographisch an eine Benutzervorrichtung gebunden ist.

6. Verfahren gemäß einem der vorhergehenden Ansprüche, wobei das Verfahren ferner aufweist:
Generieren des ersten biometrischen Codes von einer biometrischen Benutzerinformation.

7. Verfahren gemäß Anspruch 6, das ferner aufweist: Generieren eines zweiten biometrischen Codes von einer biometrischen Benutzerinformation; und Speichern des zweiten biometrischen Codes im Schlüsselbund.

8. Verfahren gemäß Anspruch 7, wobei der erste biometrische Code vom zweiten biometrischen Code und einer biometrischen Benutzerinformation generiert wird.

9. Verfahren gemäß einem der Ansprüche 6 bis 8, das ferner aufweist: Löschen des ersten biometrischen Codes, nachdem der Schlüsselbund generiert wurde.

10. Datenbanksystem zum sicheren Speichern und Kommunizieren einer Information, wobei das System aufweist:
eine Datenbank zum Speichern von Benutzerverzeichnissen, die verschlüsselte Benutzerdatenelemente enthalten, wobei die Verzeichnisse jeweils mit einem bestimmten Benutzer assoziiert sind und Datenelemente jeweils mit einem mit diesem Benutzer assoziierten Verschlüsselungsschlüssel verschlüsselt sind; und
eine oder mehrere Clientvorrichtungen, wobei die Clientvorrichtungen jeweils einen darauf gespeicherten Benutzerschlüsselbund aufweisen und der Benutzerschlüsselbund jeweils eine Vielzahl von Schlüsselbundelementen enthält, die den mit diesem Benutzer assoziierten Benutzerverschlüsselungsschlüssel und einen Benutzerverzeichnisidentifikator zum Auffinden von Benutzerverzeichnissen in der Datenbank aufweisen; wobei
das Datenbanksystem so angeordnet ist, dass es
jeweils die Vielzahl von Schlüsselbundelementen für einen bestimmten Benutzer durch Anwenden eines bestimmten Prozesses auf mindestens einen mit dem bestimmten Benutzer assoziierten ersten biometrischen Code generiert, wobei der deterministische Prozess eine erste Stufe zum Kombinieren des ersten biometrischen Codes mit einer Vielzahl von kryptographischen Salts, um eine Vielzahl von Zwischencodes zu erzeugen, und eine zweite Stufe zum Anwenden eines vorgegebenen Einweg-Hashalgorithmus auf die Zwischencodes, um die Vielzahl der Schlüsselbundelemente zu generieren, aufweist;
Benutzerdatenelemente unter Verwendung des Benutzerverschlüsselungsschlüssel verschlüsselt;
ein Benutzerverzeichnis unter Verwendung des Benutzerverzeichnisidentifikators auffindet; und
die verschlüsselten Benutzerdatenelemente in einem Benutzerverzeichnis speichert.

11. System gemäß Anspruch 10, wobei die verschlüsselte Benutzeraufzeichnung eine Information bezüglich der Identität eines Benutzers aufweist.

12. System gemäß Anspruch 11, wobei die verschlüsselte Benutzeraufzeichnung authentifizierte Kopien von Identitätsdokumenten aufweist.

13. System gemäß einem der Ansprüche 10 bis 12, das ferner einen Server aufweist, wobei die Datenbank auf dem Server gespeichert ist.

14. Computerprogramm oder Computerprogrammpaket, das so konfiguriert ist, dass es das Verfahren gemäß einem der Ansprüche 1 bis 9 ausführt.

15. Computerlesbares Medium, das das Computerprogram oder Computerprogrammpakete gemäß Anspruch 14 darauf gespeichert aufweist.

16. EDV-Vorrichtung, die so konfiguriert ist, dass sie die Schritte gemäß einem der Ansprüche 1 bis 9 ausführt.

## Revendications

1. Procédé, mis en oeuvre par ordinateur, de génération et d'utilisation d'une chaîne de clés dans un système de base de données en vue d'un stockage et d'une communication sécurisés d'informations, le système de base de données comprenant :
une base de données destinée à stocker des référentiels d'utilisateurs contenant des éléments de données d'utilisateurs chiffrés, chaque référentiel étant associé à un utilisateur spécifique, et chaque élément de données chiffré avec une clé de chiffrement d'utilisateur étant associé audit utilisateur ; et
un ou plusieurs dispositifs clients, chaque dispositif client présentant une chaîne de clés d'utilisateur stockée sur celui-ci, chaque chaîne de clés d'utilisateur contenant une pluralité d'éléments de chaîne de clés incluant la clé de chiffrement d'utilisateur associée audit utilisateur et un identificateur de référentiel d'utilisateur pour localiser des référentiels d'utilisateurs dans la base de données ;
le procédé comprenant les étapes ci-dessous consistant à :
générer chaque élément de ladite pluralité d'éléments de chaîne de clés pour un utilisateur spécifique, en appliquant un processus déterministe à au moins un premier code biométrique associé audit utilisateur spécifique ; dans lequel,
le processus déterministe inclut un premier étage consistant à combiner le premier code biométrique avec une pluralité de valeurs aléatoires cryptographiques en vue de créer une pluralité de codes intermédiaires ; et un second étage consistant à appliquer un algorithme de hachage unidirectionnel prédéterminé aux codes intermédiaires en vue de générer la pluralité d'éléments de chaîne de clés ;
chiffrer des éléments de données d'utilisateur en utilisant la clé de chiffrement d'utilisateur ;
localiser un référentiel d'utilisateur en utilisant l'identificateur de référentiel d'utilisateur ; et
stocker les éléments de données d'utilisateur chiffrés dans un référentiel d'utilisateur.

2. Procédé selon la revendication 1, comprenant en outre les étapes ci-après consistant à : générer une signature de clé, en appliquant une fonction de hachage audit au moins un élément de la chaîne de clés ; et stocker la signature de clé dans la chaîne de clés.

3. Procédé selon la revendication 2, dans lequel la signature de clé est signée par un utilisateur autorisé lors de l'inscription.

4. Procédé selon l'une quelconque des revendications précédentes, comprenant en outre l'étape ci-après consistant à : chiffrer la chaîne de clés avec au moins l'un des éléments parmi un code d'accès et des données biométriques d'utilisateur.

5. Procédé selon la revendication 4, dans lequel ladite chaîne de clés chiffrée est liée de manière cryptographique à un dispositif d'utilisateur.

6. Procédé selon l'une quelconque des revendications précédentes, dans lequel le procédé comprend en outre l'étape ci-dessous consistant à :
générer le premier code biométrique à partir d'informations biométriques de l'utilisateur.

7. Procédé selon la revendication 6, comprenant en outre les étapes ci-après consistant à : générer un second code biométrique à partir d'informations biométriques d'un utilisateur ; et stocker le second code biométrique dans ladite chaîne de clés.

8. Procédé selon la revendication 7, dans lequel ledit premier code biométrique est généré à partir du second code biométrique et d'informations biométriques d'un utilisateur.

9. Procédé selon l'une quelconque des revendications 6 à 8, comprenant en outre l'étape ci-après consistant à : supprimer le premier code biométrique suite à la génération de ladite chaîne de clés.

10. Système de base de données pour un stockage et une communication sécurisés d'informations, le système comprenant :
une base de données destinée à stocker des référentiels d'utilisateurs contenant des éléments de données d'utilisateurs chiffrés, chaque référentiel étant associé à un utilisateur spécifique, et chaque élément de données chiffré avec une clé de chiffrement d'utilisateur étant associé audit utilisateur ; et
un ou plusieurs dispositifs clients, chaque dispositif client présentant une chaîne de clés d'utilisateur stockée sur celui-ci, chaque chaîne de clés d'utilisateur contenant une pluralité d'éléments de chaîne de clés incluant la clé de chiffrement d'utilisateur associée audit utilisateur et un identificateur de référentiel d'utilisateur pour localiser des référentiels d'utilisateurs dans la base de données ; dans lequel
le système de base de données est agencé de manière à :
générer chaque élément de ladite pluralité d'éléments de chaîne de clés pour un utilisateur spécifique, en appliquant un processus déterministe à au moins un premier code biométrique associé audit utilisateur spécifique ; le processus déterministe incluant un premier étage consistant à combiner le premier code biométrique avec une pluralité de valeurs aléatoires cryptographiques en vue de créer une pluralité de codes intermédiaires, et un second étage consistant à appliquer un algorithme de hachage unidirectionnel prédéterminé aux codes intermédiaires en vue de générer la pluralité d'éléments de chaîne de clés ;
chiffrer des éléments de données d'utilisateur en utilisant la clé de chiffrement d'utilisateur ;
localiser un référentiel d'utilisateur en utilisant l'identificateur de référentiel d'utilisateur ; et
stocker les éléments de données d'utilisateur chiffrés dans un référentiel d'utilisateur.

11. Système selon la revendication 10, dans lequel l'enregistrement d'utilisateur chiffré inclut des informations concernant l'identité d'un utilisateur.

12. Système selon la revendication 11, dans lequel l'enregistrement d'utilisateur chiffré inclut des copies authentifiées de documents d'identité.

13. Système selon l'une quelconque des revendications 10 à 12, comprenant en outre un serveur, dans lequel la base de données est stockée sur le serveur.

14. Programme informatique ou suite de programmes informatiques configuré(e) de manière à mettre en oeuvre le procédé selon l'une quelconque des revendications 1 à 9.

15. Support lisible par ordinateur sur lequel est stocké le programme informatique ou la suite de programmes informatiques selon la revendication 14.

16. Dispositif informatique configuré de manière à exécuter les étapes selon l'une quelconque des revendications 1 à 9.
